# EUROPEAN PATENT APPLICATION

(11) **EP 1 746 138 A1**
(43) Date of publication of application: **24.01.2007**
(21) Application number: 05739288.8
(22) Date of filing: 16.05.2005
(51) Int. Cl.: C09D 11/00, B41J 2/01, B41M 5/00

(54) **INK SET AND INKJET RECORDING METHOD USING THE SAME AND RECORDED ARTICLE**

(30) Priority: 14.05.2004 JP 2004145496
(71) Applicant: SEIKO EPSON CORPORATION, Shinjuku-ku Tokyo-to (JP)
(72) Inventor: TANOUE, Takeshi; c/o Seiko Epson Corporation, Nagano,3928502 (JP); SANO, Tsuyoshi; c/o Seiko Epson Corporation, 3-5,, Nagano;3928502 (JP); KOGANEHIRA, Shuichi; c/o Seiko Epson Corporation,, Nagano;3928502 (JP)
(74) Representative: Grünecker, Kinkeldey, Stockmair & Schwanhäusser Anwaltssozietät
(86) International application number: PCT/JP2005/008860
(87) International publication number: WO 2005/111159

(57) **Abstract**

An ink set comprising at least a magenta ink composition and alight magenta ink composition having a pigment concentration lower than the pigment concentration of the magenta ink composition, wherein the pigment used in said magenta ink composition is C.I. pigment red 122 and the pigment used in said light magenta ink composition is C.I. pigment violet 19.

## Description

The entire disclosure of Japanese Patent Application No. 2004-145496, filed May 14, 2004, is expressly incorporated by reference herein.

### BACKGROUND

### 1. Technical Field

The present invention relates to an ink set and to an inject recording method and recorded material using the same, and particularly to an ink set having a wide range of color reproducibility from dark color areas to bright color areas, and to an inkjet recording method and recorded material using the same.

### 2. Related Art

The inkjet recording method is a method of printing by spraying droplets of an ink composition and causing them adhere to a recording medium such as paper. This method offers the advantage of allowing highspeed printing of high-resolution, high-quality images with relatively cheap equipment.

Nowadays, color images are being formed by the inkjet recording method using ink sets composed of multiple color ink compositions. In general, color images are formed using either a 3-color ink set comprising a yellow ink composition, a magenta ink composition and a cyan ink composition, or a 4-color ink set comprising these three and a black ink composition, or an ink set comprising colors other than these four as secondary colors, or an ink set comprising ink compositions of the same color (graded inks) which are classified as to saturation depending on the color gradation (concentration of the coloring agent) or the like.

An example of an ink set comprising colors other than the aforementioned four as secondary colors is disclosed in Japanese Patent Application Laid-open No. 2001-354886, which describes a water-based pigment inkjet ink set with good color reproducibility, chroma saturation and glossiness having a green ink composition and a red ink composition in addition to the four colors of a yellow ink composition, magenta ink composition, cyan ink composition and black ink composition.

An example of an ink set comprising graded ink compositions is disclosed in Japanese Patent Laid-open No. 2003-238857, which describes an ink set having two black ink compositions of different pigment concentrations, whereby color reproducibility is improved without sacrificing the graininess of the dark parts.

### SUMMARY

With conventional ink sets, however, it is difficult to achieve a wide range of color reproduction ranging from dark parts to bright parts, and at present adequate quality images cannot be obtained. An advantage of some aspects of the invention is to provide an ink set having a wide range of color reproducibility from dark color areas to bright color areas, as well as an inkjet recording method and recorded material using it.

The inventors discovered as a result of exhaustive research that an ink set with excellent color reproducibility could be obtained by using different specific pigments as the coloring materials in the graded ink composition of an ink set comprising a graded ink composition. Based on this discovery, according to an aspect of the invention provides an ink set having at least a magenta ink composition and a light magenta ink composition with a pigment concentration lower than the pigment composition of the magenta ink composition, wherein the pigment used in the aforementioned magenta ink composition is C.I. pigment red 122 and the pigment used in the aforementioned light magenta ink composition is C.I. pigment violet 19. By using such ink set, it can be obtained having a wide range of color reproducibility from low value colors to high value colors.

"Dark color areas" here are image areas in recorded material obtained with an ink set of the present invention which have an L* value of 30 or less according to the CIE (Commission Internationale de l'Eclairage) system. Likewise, "bright color areas" are images areas in recorded material obtained with an ink set of the present invention which have a L* value of 70 or more according to the CIE system.

The ratio of the concentration of the aforementioned C.I. pigment red 122 used in the aforementioned magenta ink composition to the concentration of the aforementioned C.I. pigment violet 19 used in the aforementioned light magenta ink composition is preferably between 4:3 and 14:1. A wide range of color reproduction ranging from dark color areas to bright color areas can be obtained within this range.

According to an another aspect of the invention provides an inkjet recording method in which printing is accomplished by discharging droplets of ink composition and causing the droplets to adhere to a recording medium, wherein the aforementioned ink set is used. In this way, recorded material can be obtained with a wide range of color reproduction ranging from dark color areas to bright color areas.

According to a further aspect of the invention provides recorded material which is recorded using the aforementioned ink set or by the aforementioned inkjet recording method. Since the ink compositions obtained as above are used in this inkjet recording method, recorded material can be obtained with a wide range of color reproduction ranging from dark color areas to bright color areas.

### DETAILED DESCRIPTION

As described above, the ink set of the present invention is an ink set comprising at least a magenta ink composition and a light magenta ink composition having a pigment concentration lower than the pigment concentration of the magenta ink composition, wherein the pigment used in the magenta ink composition is C.I. pigment red 122 and the pigment used in the light magenta ink composition is C.I. pigment violet 19.

The added amount of the pigment in the aforementioned magenta ink composition is preferably 1.5 to 10% by weight or more preferably 2 to 7% by weight. From the standpoint of preventing clogging and otherwise improving ink reliability it is preferable to add less pigment, while from the standpoint of color reproducibility it is preferable to add more pigment. Therefore, the added amount of the pigment is more preferably 5 to 6% by weight.

Moreover, the added amount of the pigment in the aforementioned light magenta ink composition is preferably 0.01 to 2% by weight or more preferably 0.5 to 2.0% by weight. If the added amount of the pigment in the aforementioned light magenta ink composition exceeds 2% by weight the ink will be less grainy.

Consequently, the added amount of the pigment in the aforementioned light magenta ink composition is still more preferably 1.2 to 2% by weight.

The ratio of the concentration of C.I. pigment 122 in the magenta ink composition to the concentration of C.I. pigment violet 19 in the light magenta ink composition is preferably between 4:3 and 14:1, and is more preferably 3:1 to 5:1 from the standpoint of achieving excellent color reproducibility.

In the ink compositions used in the present invention, these pigments are preferably added to the inks as pigment dispersions obtained by dispersing in an aqueous medium using a resin or surfactant as the dispersant. Resins that can be using as dispersants include resins ordinarily used in preparing pigment dispersions, such as polymer resins. These dispersants can also be added to the ink compositions without forming a pigment dispersion.

Examples of the aforementioned polymer resin include (meth)acrylic resins, vinyl acetate resins, styrene-butadiene resins, vinyl chloride resins, (meth)acrylic-styrene resins, butadiene resins, styrene resins, crosslinked (meth) acrylic resins, crosslinked styrene resins, benzoguanamine resins, phenol resins, silicone resins, epoxy resins and the like, but of these a (meth)acrylic-styrene resin is preferred.

The (meth)acrylic-styrene resin is preferably water soluble, with a molecular weight of preferably 1,000 to 15,000 or more preferably 3,000 to 10,000, and an acid value of preferably 50 to 200 or more preferably 70 to 150.

The added amounts of the resin (solids conversion) are amounts within the range at which the weight ratio thereof in the magenta ink composition is lower than the weight ratio thereof in the light magenta ink composition, and are not particularly limited within that range. Normally in the case of the aforementioned magenta ink composition 10 to 100 parts by weight or especially 20 to 80 parts by weight of the resin is added per 100 parts by weight of the pigment, while in the case of the aforementioned light magenta ink composition 10 to 100 parts by weight or particularly 20 to 100 parts by weight is added per 100 parts by weight of the pigment.

Examples of the aforementioned surfactant as the dispersant include anionic surfactants (such as sodium dodecylbenzene sulfonate, sodium laurate, ammonium salts of polyoxyethylene alkyl ether sulfate and the like) and non-ionic surfactants (such as polyoxyethylene alkyl ether, polyoxyethylene alkyl ester, polyoxyethylene sorbitan fatty acid ester, polyoxyethylene alkyl phenyl ether, polyoxyethylene alkylamine, polyoxyethylene alkylamide and the like). Acetylene glycols (Olfine Y, STG and Surfynol 82, 104, 440, 465 and 485 (all Air Products and Chemicals Inc.)) and the like can also be used. These may be used alone or two or more may be used in combination.

The added amount of the surfactant is preferably 0.05 to 5% by weight or more preferably 0.1 to 1.5% by weight of each of the aforementioned magenta ink and light magenta ink compositions.

In the present invention, the aforementioned magenta ink and light magenta ink compositions may comprise resin emulsions in which a resin as the dispersant is used as the dispersed phase and water is used as the continuous phase. The aforementioned resin may be a polymer having both a hydrophilic part and a hydrophobic part. There are no particular limits on the grain size of these resins as long as they can form emulsions, but normally 150 nm or less or preferably 5 to 100 nm is desirable.

These resin emulsions can be obtained by dispersion polymerization of a resin monomer in water, sometimes in combination with a surfactant. For example, an emulsion of (meth)acrylic resin or styrene-(meth)acrylic resin can be obtained by dispersion polymerizing a (meth)acrylic acid ester or a (meth)acrylic acid ester and styrene in water together with a surfactant. The mixed proportions of the resin component and surfactant (weight ratio) are preferably between 10:1 and 5:1. Good water-resistance and permeability of the ink composition are obtained if the amount of the surfactant is in this range. There are no particular limits on the surfactant, but desirable examples include the aforementioned surfactants.

The proportion of resin as the dispersed phase component relative to water as the continuous phase component is preferably 60 to 400 parts by weight or more preferably 100 to 200 parts by weight of water per 100 parts by weight of resin.

A known resin emulsion can be used as this resin emulsion, and for example the resin emulsions described in Japanese Patent Publication S62-1426, Japanese Patent Application Laid-open No. H3-56573, Japanese Patent Application Laid-open No. H3-79678, Japanese Patent Application Laid-open No. H3-160068 and Japanese Patent Application Laid-open No. H4-18462 and the like can be used as is.

A commercial resin emulsion can also be used, and examples include Microgel E-1002 and E-5002 (styrene-acrylic resin emulsions, Japan Paint), Voncoat 4001 (acrylic resin emulsion, Dainippon Ink and Chemicals), Voncoat 5454 (styrene-acrylic resin emulsion, Dainippon Ink and Chemicals), SAE-1014 (styrene-acrylic resin emulsion, Nippon Zeon), Saivinol SK-200 (acrylic resin emulsion, Saiden Chemical Industry) and the like.

The resin emulsion is preferably contained in the aforementioned magenta ink and light magenta ink compositions so that the resin component constitutes 0.1 to 40% by weight or especially 1 to 25% by weight of the ink composition. The resin emulsion has the effect of controlling permeation of the pigment which is the coloring agent and promoting its fixing on the recording medium. Depending on the type of resin emulsion, a coat can also be formed on the ink image surface on the recording medium, thus improving abrasion resistance of the printed material.

The aforementioned magenta ink and light magenta ink compositions preferably comprise a thermoplastic resin in resin emulsion form. A thermoplastic resin here is one with a softening temperature of normally 50 to 250°C or preferably 60 to 200°C. The term "softening temperature" here includes the lowest temperature of a thermoplastic resin's glass transition point, melting point, pour point, temperature at which the viscosity coefficient reaches 1011 to 1012 poise and minimum film-formation temperature (MFT) when the resin is in the form of a resin emulsion. In the heating step of the method of recording a printed image using an ink set of the present invention, the recording medium is heated to a temperature at or below the softening temperature of the thermoplastic resin. Moreover, these resins preferably form a film with strong water resistance and abrasion resistance when they are heated to a temperature at or above the softening or melting temperature and then cooled.

In place of the aforementioned pigment and dispersant, it is possible to use a so-called self-dispersing pigment which can be dispersed and/or dissolved in water without a dispersant due to the presence of dispersion-promoting groups directly introduced onto the surface of the pigment particles by chemical means without the use of a dispersion polymer in an ink composition used in the ink set of the present invention.

The aforementioned aqueous medium includes water as well as various water-soluble organic solvents and various additives. When water is used as the aforementioned aqueous medium, the water is added as the remainder to the various components in the aforementioned magenta ink and light magenta ink compositions. Examples of water-soluble organic solvents and various additives include penetrating agents, wetting agents, pH modifers and the like.

A penetrating agent preferably increases wettability of the recording medium and penetration of the organic pigment. Examples of penetrating agents include various surfactants such as cationic surfactants, anionic surfactants and non-ionic surfactants; methanol, ethanol, isopropanol alcohol and other alcohols; ethylene glycol monomethyl ether, diethylene glycol monoethyl ether, diethylene glycol monobutyl ether, triethylene glycol monobutyl ether, propylene glycol monobutyl ether and other lower alkyl ethers of polyvalent alcohols; and 1,2-pentanediol, 1,2-hexanediol and other diols, and one or two or more of these can be used. It is particularly desirable to use a diol such as 1,2-hexanediol.

The aforementioned penetrating agent constitutes preferably about 0.1 to 20% by weight or more preferably 3 to 15% by weight of the ink composition.

A desirable example of penetrating agent is a 1,2-alkanediol and/or silicon surfactant.

An example of the aforementioned silicon surfactant is the polyether denatured organosiloxane compound represented by General Formula (1) below: 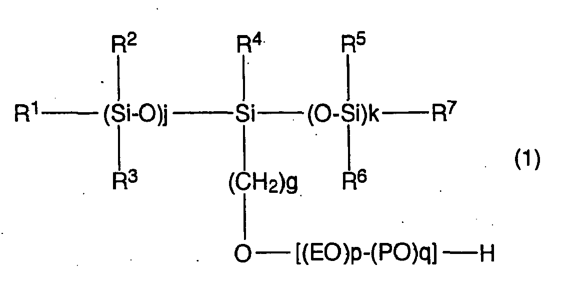 (wherein R¹ through R⁷ are each independently C₁₋₆ alkyl groups, j, k and g are each independently integers 1 or greater, EO is an ethyleneoxy group, PO is a propyleneoxy group, p and q are integers 0 or greater (however, p + q equals an integer 1 or greater, and EO and PO may be either random or a block irrespective of their order within the square brackets).

Examples of the 1,2-alkanediol include those with 4 to 6 carbon atoms such as 1,2-butanediol and 1,2-pentanediol as well as 1,2-hexanediol, with 1,2-pentanediol and 1,2-hexanediol being preferred and 1,2-hexanediol most preferred. One or a combination of two or more of these can be used.

The added amount of the 1,2-alkanediol is in the range of preferably about 0.1-20% by weight or more preferably about 3 to 15% by weight or still more preferably about 5 to 10% by weight of the ink composition.

In the polyether denatured organosiloxane compound represented by General Formula (1) above, R¹ through R⁷ are preferably each independently alkyl groups with 1 to 6 carbon atoms, and are preferably methyl groups. j, k and g are each independently integers 1 or greater, and are preferably 1 or 2. p and q are integers 0 or greater, with p + q equaling an integer 1 or greater.

A more desirable example of the polyether denatured organosiloxane compound represented by General Formula (1) above is a compound fulfilling the condition of j = k + 1, wherein for example R¹ through R⁷ are all methyl groups, j is 2, k is 1, g is 1, p is 1 or an integer greater than 1 and q is 0.

Compounds represented by General Formula (1) above are commercially available, and these can be used. For example, the silicon surfactants BYK-345, BYK-346, BYK-347 and BYK-348, which are sold by BYK-Chemie Japan, can be used.

The added amount of the polyether denatured organosiloxane compound can be determined appropriately but a range of about 0.01 to 1.0% by weight or preferably about 0.3 to 0.8% by weight of the ink composition is desirable.

Other desirable examples of the penetrating agent include polyvalent alcohol lower alkyl ethers (glycol ethers) and/or the acetylene glycol surfactant represented by General Formula (2) below.

Examples of the aforementioned polyvalent alcohol lower alkyl ethers (glycol ethers) include diethylene glycol monobutyl ether, triethylene glycol monobutyl ether, propylene glycol monobutyl ether and dipropylene glycol monobutyl ether. Of these, triethylene glycol monobutyl ether is particularly desirable.

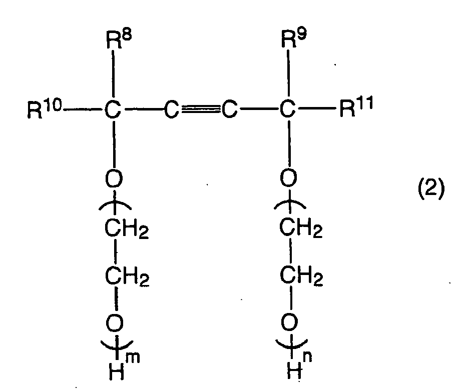

(wherein 0 ≤ m+n ≤ 30, and R⁸ through R¹¹ are each independently C₁₋₆ alkyl groups.)

A commercial product can be used as the acetylene glycol surfactant represented by General Formula (2) above. Specific examples include Surfynol 104, 82, 465, 485 and TG (all available from Air Product and Chemicals, Inc.), and Olfine STG and Olfine E1010 (trade names, Nisshin Chemical).

The added amount of the polyvalent alcohol lower alkyl ether is preferably 1 to 30% by weight or more preferably 5 to 20% by weight.

The added amount of the acetylene glycol surfactant may be determined appropriately within the range of preferably 0.01 to 5% by weight or more preferably 0.1 to 1% by weight of the ink composition.

A wetting agent is desirable for preventing clogging of the inkjet printer nozzle. Examples of wetting agents include glycerin, ethylene glycol, diethylene glycol, triethylene glycol, tetraethylene glycol, propylene glycol, dipropylene glycol, tripropylene glycol, polyethylene glycols with molecular weights of 2000 or less, 1,3-propylene glycol, isopropylene glycol, isobutylene glycol, 1,4-butanediol, 1,3-butanediol, 1,5-pentanediol, 1,6-hexanediol, mesoerythritol, pentaerythritol and other polyvalent alcohols, and glycerin is preferred.

The added amount of the wetting agent can be determined appropriately but is preferably about 0.1 to 30% by weight or more preferably about 0.5 to 25% by weight of the ink composition.

Examples of pH modifers include sodium hydroxide, triethanolamine and the like. The added amount of the pH adjuster is determined according to the desired pH.

An ink composition used in an ink set according to this embodiment may include as necessary additives such as water-soluble rosins and other fixers, sodium benzoate and other antiseptic and antifungal agents, allophanate and other antioxidants and ultraviolet adsorbers, and chelating agents.

An ink set of the present invention may include normal ink compositions in addition to the aforementioned magenta ink composition and light magenta ink composition. A yellow ink compositions and a cyan ink composition are desirable as such ink compositions. Coloring agents, dispersants and the like which are used in ordinary ink compositions can be used as components in these ink compositions without any particular limitations.

A yellow pigment and cyan pigment are preferably used as the coloring agents in the aforementioned yellow ink composition and cyan ink composition. Examples of the aforementioned yellow pigment include C.I. pigment yellow 74, 93, 109, 110, 128, 138, 150, 151, 154, 155, 180 and 185 and the like, while examples of the aforementioned cyan pigment include C.I. pigment blue 1, 2, 3, 15:3, 15:4, 15:34, 16, 22 and 60 and C.I. vat blue 4, 60 and the like.

Moreover, the ink set of the present invention may also comprise a light cyan ink composition with a pigment concentration lower than the pigment concentration of the cyan ink composition. In particular, it is desirable from the standpoint of obtaining recorded material with a wide range of color reproduction that a yellow composition, cyan ink composition and light cyan ink composition be combined together with the aforementioned magenta ink composition and light magenta ink composition. In addition, a black ink composition comprising carbon black or the like can be included as necessary.

The ink set of the present invention is applicable to a variety of printing systems, and in particular can be used by preference in inkjet recording systems.

Moreover, with a method using the aforementioned ink set of the present invention in an ink jet recording method in which printing is accomplished by discharging droplets of ink composition and causing them to adhere to a recording medium, it is possible to obtain recorded material with a wide range of color reproduction ranging from dark color areas to bright color areas.

### Examples

The present invention is explained in detail below using examples. First, color ink compositions (inks Nos. 1-13) were prepared with the compositions and proportions shown in the following table. In the table, PV 19 signifies C.I. pigment violet 19, PR 122 is C.I. pigment red 122, PY 74 is C.I. pigment yellow 74, and PB 15:3 is C.I. pigment blue 15:3. BYK-348 is the silicon surfactant BYK-348 purchased from BYK-Chemie Japan.

### [Table1]

Using the aforementioned ink compositions (inks Nos. 1-13), ink sets A through K were configured with the combinations shown in the table below. The ink numbers used in this table correspond to the ink numbers used in Table 1.

### [Table 2]

In ink set A (Example 1) and ink set B (Example 2), 6% by weight of C.I. pigment red 122 (PR 122) was used as the pigment in the magenta ink composition, while 1% by weight of C.I. pigment violet 19 (PV 19) was used as the pigment in the light magenta ink composition.

In ink set C (Example 3), 5.5% by weight of C.I. pigment red 122 (PR 122) was used as the pigment in the magenta ink composition, while 1.5% by weight of C.I. pigment violet 19 was used as the pigment in the light magenta ink composition.

In ink set D (Example 4), 6% by weight of C.I. pigment red 122 (PR 122) was used as the pigment in the magenta ink composition, while 1.5% by weight of C.I. pigment violet 19 (PV 19) was used as the pigment in the light magenta ink composition.

In ink set E (Example 5), 6% by weight of C.I. pigment red 122 (PR 122) was used as the pigment in the magenta ink composition, while 1.2% by weight of C.I. pigment violet 19 (PV 19) was used as the pigment in the light magenta ink composition.

In ink set F (Example 6), 6% by weight of C.I. pigment red 122 (PR 122) was used as the pigment in the magenta ink composition, while 1.8% by weight of C.I. pigment violet 19 (PV 19) was used as the pigment in the light magenta ink composition.

In ink set G (Example 7), 6% by weight of C.I. pigment red 122 (PR 122) was used as the pigment in the magenta ink composition, while 2.0% by weight of C.I. pigment violet 19 (PV 19) was used as the pigment in the light magenta ink composition.

In ink set H (Comparative Example 1), 6% by weight of C.I. pigment red 122 (PR 122) was used as the pigment in the magenta ink composition, while 1% by weight of C.I. pigment red 122 (PR 122) was used as the pigment in the light magenta ink composition.

In ink set I (Comparative Example 2), 6% by weight of C.I. pigment violet 19 (PV 19) was used as the pigment in the magenta ink composition, while 1% by weight of C.I. pigment violet 19 (PR 19) was used as the pigment in the light magenta ink composition.

In ink set J (Comparative Example 3), 6% by weight of C.I. pigment red 122 (PR 122) was used as the pigment in the magenta ink composition, and no light magenta ink composition was used.

In ink set K (Comparative Example 4), 6% by weight of C.I. pigment violet 19 (PV 19) was used as the pigment in the magenta ink composition, and no light magenta ink composition was used.

### Test Example 1 Evaluation of total gamut area (color reproducibility 1)

Total gamut area (that is, color reproducibility) was evaluated as follows using the ink sets A through K of the examples and comparative examples. Recorded material was obtained by printing using a PM-4000PX (Seiko-Epson) inkjet printer, specialized inkjet paper (Seiko-Epson, Premium Glossy Photo Paper) and a resolution of 1440 x 720. The single-color 100% duty was 13 mg/inch² and the mixed-color 120% duty was 16 mg/inch² for purposes of printing. Taking these as the maximum duty values, the duty value of each single-color ink was varied at intervals of 3% in the range of 0-100%, and all colors were printed reproducibly with the ink set by recombining all inks in the ink set.

Each color in each resulting printed material was measured with a colorimeter (Gretag Macbeth SPM50, viewing angle 2°, D50 light source), to obtain L*, a* and b* values according to CIE. Given a gamut area of 1 when all CIE values L*, a* and b* were 1, the total gamut area of each recorded material was calculated from the resulting L*, a* and b* values, and the following evaluation was based on the results. The evaluation results are shown together in Table 3 for the magenta ink composition and light magenta ink composition.
- AA:: Total gamut area of 750,000 or more
- A:: Total gamut area of at least 740,000 and less than 750,000
- B:: Total gamut area of at least 720,000 and less than 740,000
- C:: Total gamut area of less than 720,000

### Test Example 2 Evaluation of total gamut area (color reproducibility 2)

Total gamut area (color reproducibility) was evaluated as in Test Example 1 except that printing was on specialized inkjet paper (Seiko-Epson, Premium Glossy Photo Paper) at a resolution of 7.20 x 720. The evaluation criteria were as follows. The evaluation results are shown together in Table 3 for the magenta ink composition and light magenta ink composition.
- A:: Total gamut area of 680,000 or more
- B:: Total gamut area of at least 650,000 and less than 680,000
- C:: Total gamut area of less than 650,000

### Test Example 3 Color reproducibility evaluation of bright color areas and dark color areas (color reproducibility 3)

The gamut areas of bright color areas and dark color areas were evaluated as follows using the ink sets A through K of the examples and comparative examples. Patch patterns comprising a variety of hues with uniform, specific L* values were obtained by printing using a PM-4000 PX inkjet printer (Seiko-Epson) and each of ink sets A through K on specialized inkjet paper (Seiko-Epson Premium Glossy Photo Paper). The colors of the patch patterns of the respective ink sets were measured using a colorimeter (Gretag Macbeth SPM50).

Values (%) for bright color areas (L* = 70) and dark color areas (L* = 10) were calculated from the aforementioned measurement results using the color reproduction areas of ink set H and ink set I as standards (100%) for the bright color areas and dark color areas, respectively, and color reproducibility of the ink sets was evaluated according to the following criteria based on the resulting percentages. The evaluation results are shown together in Table 3 for the magenta ink composition and light magenta ink composition.
- A:: Over 105%
- B:: Over 100%, no more than 105%
- C:: 100%

### Test Example 4 Evaluation of color development on ordinary paper

Color development on ordinary paper was evaluated as follows using the ink sets A through K of the examples and comparative examples. Xerox 4024 paper was used as the ordinary paper. Recorded material was obtained by printing using a PM-4000 PX (Seiko-Epson) printer loaded with each of ink sets A through K, with a mixed-color 100% duty and a resolution of 720 x 720.

The resulting recorded material was measured using a colorimeter (Gretag Macbeth SPM50, viewing angle 2°, D50 light source) to measure the concentration (OD value) of the magenta component of the mixed color. The evaluation criteria were as follows. The evaluation results are shown together in Table 3 for the magenta ink composition and light magenta ink composition.
- A:: 1.20 or more
- B:: 1.00 or more, less than 1.20
- C:: Less than 1.00

### [Table 3]

Table 3 shows that the ink sets (A-G) of Examples 1 through 7 exhibit better color reproducibility than the ink sets (H-K) of Comparative Examples 1 through 4. In particular, there was an obvious difference between the examples and comparative examples in terms of color reproducibility at a resolution of 1440 x 720 (color reproducibility 1) and color reproducibility in bright color areas (color reproducibility 3).

As explained above, the present invention can provide an ink set having a wide range of color reproducibility from dark color areas through bright color areas, as well as an ink jet recording method and recorded material using that ink set.

**[Table 1]**

| | Yellow | Cyan | Light Cyan | Magenta | | | Light Magenta | | | | | | Black |
|---|---|---|---|---|---|---|---|---|---|---|---|---|---|
| Ink No. | 1 | 2 | 3 | 4 | 5 | 6 | 7 | 8 | 9 | 10 | 11 | 12. | 13 |
| PV 19 (weight %) | | | | 6.00 | | | 1.00 | | 1.50 | 1.20 | 1.80 | 2.00 | |
| PR 122 (weight %) . | | | | | 6.00 | 5.50 | | 100 | | | | | |
| PY 74 (weight %) | 5.00 | | | | | | | | | | | | |
| PB 15:3 (weight %) | | 4.00 | 1.00 | | | | | | | | | | |
| Carbon black (weight %) | | | | | | | | | | | | | 2.00 |
| Dispersant (weight %) | 1.50 | 1.20 | 0.30 | 1.80 | 1.80 | 1.60 | 0.30 | 0.30 | 0.50 | 0.40 | 0.60 | 0.70 | 0.60 |
| Glycerin (weight %) | 16.00 | 13.00 | 22.00 | 11.00 | 11.00 | 23.00 | 22.00 | 23.00 | 20.00 | 21.00 | 19.00 | 18.00 | 15.00 |
| 1,2-hexanediol (weight %) | 5.00 | 5.00 | 5.00 | 5.00 | 5.00 | 5.00 | 5.00 | 5.00 | 5.00 | 5.00 | 5.00 | 5.00 | 5.00 |
| BYK-348 (weight %) | 0.50 | 0.50 | 0.50 | 0.50 | 0.50 | 0.50 | 0.50 | 0.50 | 0.50 | 0.50 | 0.50 | 0.50 | 0.50 |
| Triethanolamine | 0.90 | 0.90 | 0.90 | 0.90 | 0.90 | 0.90 | 0.90 | 0.90 | 0.90 | 0.90 | 0.90 | 0.90 | 0.90 |
| (weight %) Pure water | Remain der | Remain der | Remain der | Remain der | Remain der | Remain der | Remain der | Remain der | Remain der | Remain der | Remain der | Remain der | Remain der |
| Total (%) | 100 | 100 | 100 | 100 | 100 | 100 | 100 | 100 | 100 | 100 | 100 | 100 | 100 |

**[Table 2]**

| | Ink No. | | | | | |
|---|---|---|---|---|---|---|
| Ink set | Yellow | Cyan | Light Cyan | Magenta | Light Magenta | Black |
| A (Example 1) | 1 | 2 | 3 | 5 | 7 | - |
| B (Example 2) | 1 | 2 | 3 | 5 | 7 | 13 |
| C (Example 3) | 1 | 2 | 3 | 6 | 9 | 13 |
| D (Example 4) | 1 | 2 | 3 | 5 | 9 | 13 |
| E (Example 5) | 1 | 2 | 3 | 5 | 10 | 13 |
| F (Example 6) | 1 | 2 | 3 | 5 | 11 | 13 |
| G (Example 7) | 1 | 2 | 3 | 5 | 12 | 13 |
| H (Comparative Example 1) | 1 | 2 | 3 | 5 | 8 | - |
| I (Comparative Example 2) | 1 | 2 | 3 | 4 | 7 | - |
| J (Comparative Example 3) | 1 | 2 | - | 5 | - | - |
| K (Comparative Example 4) | 1 | 2 | - | 4 | - | - |

**[Table 3]**

| Ink set | Magenta | Light Magenta | Color reproducibility 1 (total gamut area) | Color reproducibility 2 (total gamut area) | Color reproducibility 3 | | Ordinary paper color development |
|---|---|---|---|---|---|---|---|
| | | | | | Bright color area | Dark color area | |
| A (Example 1) | PR122 | PV19 | A | B | A | A | A |
| B (Example 2) | PR122 | PV19 | A | B | A | A | A |
| C (Example 3) | PR122 | PV19 | AA | A | AA | A | A |
| D (Example 4) | PR122 | PV19 | AA | A | AA | A | A |
| E (Example 5) | PR122 | PV19 | AA | A | AA | A | A |
| F (Example 6) | PR122 | PV19 | AA | A | AA | A | A |
| G (Example 7) | PR122 | PV19 | AA | A | AA | A | A |
| H (Comparative Example 1) | PR122 | PR122 | C | B | C | A | A |
| I (Comparative Example 2) | PV19 | PV19 | B | A | A | C | B |
| J (Comparative Example 3) | PR122 | - | B | B | B | A | A |
| K (Comparative Example 4) | PV19 | - | B | A | B | C | B |

## Claims

1. An ink set comprising at least a magenta ink composition and a light magenta ink composition having a pigment concentration lower than the pigment concentration of the magenta ink composition, wherein the pigment used in said magenta ink composition is C.I. pigment red 122 and the pigment used in said light magenta ink composition is C.I. pigment violet 19.

2. The ink set according to Claim 1, wherein the ratio of the concentration of said C.I. pigment red 122 used in said magenta ink composition to the concentration of said C.I. pigment violet 19 used in said light magenta ink composition is between 4:3 and 14:1.

3. The ink set according to Claim 1, wherein said magenta ink composition and said light magenta ink composition comprise a dispersant for dispersing the pigment.

4. The ink set according to Claim 3, wherein said dispersant is a resin or surfactant.

5. The ink set according to Claim 1, wherein said magenta ink composition and said light magenta ink composition comprise a penetrating agent for increasing penetration of the pigment into a recording medium.

6. The ink set according to Claim 5, wherein said penetrating agent is a 1,2-alkanediol and/or a silicon surfactant.

7. The ink set according to Claim 1, wherein said magenta ink composition and said light magenta ink composition comprise a wetting agent.

8. The ink set according to Claim 7, wherein said wetting agent is a polyvalent alcohol.

9. The ink set according to any one of Claims 1 through 8, further comprising a yellow ink composition, a cyan ink composition and a light cyan ink composition.

10. An inkjet recording method in which printing is accomplished by discharging droplets of an ink composition and causing the droplets to adhere to a recording medium, wherein the ink set according to Claim 1 is used.

11. A recorded material which is recorded using the ink set according to Claim 1 or by the inkjet recording method according to Claim 10.
